# EUROPEAN PATENT APPLICATION

(11) **EP 3 407 211 A1**
(43) Date of publication of application: **28.11.2018**
(21) Application number: 17740984.4
(22) Date of filing: 11.01.2017
(51) Int. Cl.: G06F 17/30

(54) **METHOD FOR PROCESSING MACHINE ABNORMALITY, METHOD FOR ADJUSTING LEARNING RATE, AND DEVICE**

(30) Priority: 21.01.2016 CN 201610041708
(71) Applicant: Alibaba Group Holding Limited, Grand Cayman (KY)
(72) Inventor: ZHOU, Jun, Hangzhou, Zhejiang 311121 (CN)
(74) Representative: Finnegan Europe LLP
(86) International application number: PCT/CN2017/070906
(87) International publication number: WO 2017/124953

(57) **Abstract**

The present application discloses a machine-exception handling method, a learning-rate adjustment method, and apparatuses. The method includes: acquiring gradient consumption time of a target machine, wherein the gradient consumption time is used to denote gradient related time consumed by the target machine in a training process; determining whether the gradient consumption time satisfies a predetermined condition compared with a preacquired consumption time average value, wherein the consumption time average value is used to denote an average value of the gradient related time consumed by all machines other than the target machine in a cluster in the training process; and determining that the target machine is abnormal if the gradient consumption time satisfies the predetermined condition compared with the consumption time average value. The present application can solve the technical problem of high training costs caused by low computation or communication speeds of some machines in a cluster.

## Description

### Technical Field

The present application relates to the field of Internet, and in particular, to a machine-exception handling method, a learning-rate adjustment method, and apparatuses.

### Background Art

All Internet companies have a large amount of user behavior data, and a machine learning method is usually used to extract useful information such as user preferences from the data. Such information is extracted to improve user experience and increase the revenues of Internet companies.

A core approach of machine learning is to solve a minimum value of a loss function (the loss function is a function for measuring a loss or an error. For example, in advertisement search, if the value of the loss function is smaller, the probability that a user clicks a found advertisement is higher). A gradient descent method (a gradient is a vector and a derivative of a loss function with respect to a weight) is the most widely used method for solving a minimum value of a loss function in machine learning, and is massively used in various optimization problems due to its simple implementation and rapid calculation. A learning rate (generally denoted by Eta) is an important parameter in weight update (a weight is a vector and may be understood as an independent variable of a loss function) and can affect the convergence of a training process. If Eta is excessively large, each round of iteration may go too far and easily miss an optimal solution. If Eta is excessively small, each round of iteration may be too slow and affect a convergence speed.

At present, when such large-scale machine learning is used to solve problems, training is usually performed on a cluster. A cluster environment includes a plurality of machines. However, machines always have different loads at different time points. Some machines have high operation speeds. Some machines have light communication loads and accordingly high communication efficiency. However, many machines have very high loads and consequently very slow computation. Some machines may also have very low communication speeds because of low-level configurations. As a result, an entire training process is very slow, a large amount of machine resources are used, and enormous financial costs are incurred (For example, 800 machines are needed to train one user preference. Assuming that the cost of one machine per hour is C and the training takes a total of T hours, the cost is 800 × C × T. If C is greater than 1000 and T is greater than 100, the cost of one successful training is at least 8,000,000. If a failure occurs in a training process, the training process needs to be started again, and the costs are even higher).

Currently, no effective solution has been provided yet with respect to the foregoing problem.

### Summary of the Invention

Embodiments of the present application provide a machine-exception handling method, a learning-rate adjustment method, and apparatuses, to at least solve the technical problem of high training costs caused by low computation or communication speeds of some machines in a cluster.

According to an aspect of the embodiments of the present application, a machine-exception handling method is provided, including: acquiring gradient consumption time of a target machine, wherein the gradient consumption time is used to denote gradient related time consumed by the target machine in a training process; determining whether the gradient consumption time satisfies a predetermined condition compared with a preacquired consumption time average value, wherein the consumption time average value is used to denote an average value of the gradient related time consumed by all machines other than the target machine in a cluster in the training process; and determining that the target machine is abnormal if the gradient consumption time satisfies the predetermined condition compared with the consumption time average value.

According to another aspect of the embodiments of the present application, a learning-rate adjustment method is further provided, including: acquiring a gradient calculated by a target machine; calculating a learning rate corresponding to the gradient according to the gradient; determining whether the learning rate is less than a preset threshold; and stopping performing a weight update operation if the learning rate is less than the preset threshold; or performing the weight update operation if the learning rate is greater than or equal to the preset threshold.

According to another aspect of the embodiments of the present application, a machine-exception handling apparatus is further provided, including: a first acquisition unit configured to acquire gradient consumption time of a target machine, wherein the gradient consumption time is used to denote gradient related time consumed by the target machine in a training process; a determination unit configured to determine whether the gradient consumption time satisfies a predetermined condition compared with a preacquired consumption time average value, wherein the consumption time average value is used to denote an average value of the gradient related time consumed by all machines other than the target machine in a cluster in the training process; and a detection unit configured to determine that the target machine is abnormal if the gradient consumption time satisfies the predetermined condition compared with the consumption time average value.

According to another aspect of the embodiments of the present application, a learning-rate adjustment apparatus is further provided, including: a second acquisition unit configured to acquire a gradient calculated by a target machine; a calculation unit configured to calculate a learning rate corresponding to the gradient according to the gradient; a processing unit configured to determine whether the learning rate is less than a preset threshold; and stop performing a weight update operation if the learning rate is less than the preset threshold; or perform the weight update operation if the learning rate is greater than or equal to the preset threshold.

In the embodiments of the present application, gradient consumption time of a target machine is acquired, wherein the gradient consumption time is used to denote gradient related time consumed by the target machine in a training process; it is determined whether the gradient consumption time satisfies a predetermined condition compared with a preacquired consumption time average value, wherein the consumption time average value is used to denote an average value of the gradient related time consumed by all machines other than the target machine in a cluster in the training process; and it is determined that the target machine is abnormal if the gradient consumption time satisfies the predetermined condition compared with the consumption time average value. In this manner, gradient consumption time of a target machine is compared with a consumption time average value of all machines other than the target machine, to determine whether the target machine is abnormal. When the target machine is abnormal, a training strategy is adjusted in time to avoid the problem of increased training costs caused by low computation or communication speeds of some machines, so that the objective of determining an abnormal machine in a cluster in time can be achieved, the technical effect of reducing training costs can be achieved, and the technical problem of high training costs caused by low computation or communication speeds of some machines in the cluster can be solved.

### Brief Description of the Drawings

The accompanying drawings described here are used to provide further understanding of the present application and constitute a part of the present application. Schematic embodiments of the present application and the description of the schematic embodiments are used to explain the present application and do not improperly limit the present application. In the accompanying drawings:
FIG. 1 is a structural block diagram of hardware of a computer terminal that performs a machine-exception handling method according to an embodiment of the present application;
FIG. 2 is a schematic flowchart of an optional machine-exception handling method according to an embodiment of the present application;
FIG. 3 is a schematic flowchart of another optional machine-exception handling method according to an embodiment of the present application;
FIG. 4 is a schematic flowchart of an optional learning-rate adjustment method according to an embodiment of the present application;
FIG. 5 is a schematic structural diagram of an optional machine-exception handling apparatus according to an embodiment of the present application;
FIG. 6 is a schematic structural diagram of another optional machine-exception handling apparatus according to an embodiment of the present application;
FIG. 7 is a schematic structural diagram of an optional processing unit according to an embodiment of the present application;
FIG. 8 is a schematic structural diagram of still another optional machine-exception handling apparatus according to an embodiment of the present application;
FIG. 9 is a schematic structural diagram of an optional learning-rate adjustment apparatus according to an embodiment of the present application; and
FIG. 10 is a structural block diagram of a computer terminal according to an embodiment of the present application.

### Detailed Description

To enable those skilled in the art to better understand the solution of the present application, the technical solutions in the embodiments of the present application are clearly and completely described in the following with reference to the accompanying drawings in the embodiments of the present application. Apparently, the described embodiments are merely a part rather than all of the embodiments of the present application. All other embodiments obtained by those of ordinary skill in the art based on the embodiments of the present application without creative efforts shall fall within the protection scope of the present application.

It should be noted that the terms "first", "second", and the like used in the specification and claims of the present application and the accompanying drawings are only used to distinguish similar objects and not necessarily used to describe a particular order or time sequence. It should be understood that the data thus used are interchangeable in appropriate circumstances and that the embodiments of the present application described here can be implemented in other sequences than those illustrated or described here. Moreover, the terms "comprise" and "have" or any variation of such terms are intended to cover a non-exclusive inclusion. For example, a process, method, system, product or device that includes a series of steps or units not only includes those steps or units specified expressly, but also includes other steps or units that are not specified expressly or are inherent to the process, method, product or device.

### Embodiment 1

According to this embodiment of the present application, a method embodiment of a machine-exception handling method is further provided. It should be noted that the steps shown in the flowcharts of the accompanying drawings may be performed in a computer system having a set of computer executable instructions. Moreover, although a logic order is shown in the flowcharts, in some circumstances, the shown or described steps may be performed in an order different from the order here.

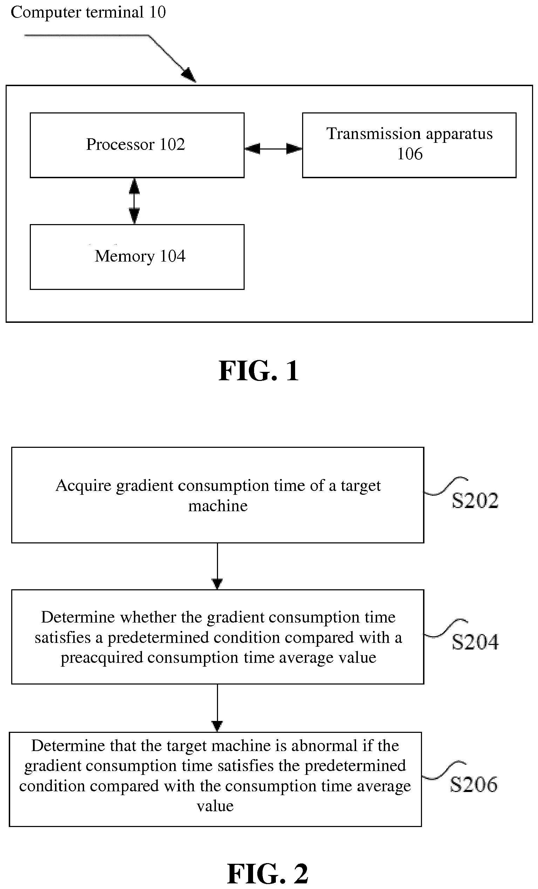

The method embodiment provided in Embodiment 1 of the present application may be performed on a mobile terminal, a computer terminal or a similar operational apparatus. For example, the method is performed on a computer terminal. FIG. 1 is a structural block diagram of hardware of a computer terminal of a machine-exception handling method according to this embodiment of the present application. As shown in FIG. 1, a computer terminal 10 may include one or more (only one is shown in the figure) processors 102 (the processor 102 may include, but is not limited to, a processing apparatus such as a microcontroller unit (MCU) or a programmable logic device FPGA), a memory 104 configured to store data, and a transmission apparatus 106 configured to perform a communication function. Those of ordinary skill in the art may understand that the structure shown in FIG. 1 is only schematic, but does not limit the structure of the foregoing electronic apparatus. For example, the computer terminal 10 may further include more or fewer components than those shown in FIG. 1, or have a configuration different from that shown in FIG. 1.

The memory 104 may be configured to store software programs and modules of application software, for example, program instructions/modules corresponding to the machine-exception handling method in this embodiment of the present application. The processor 102 runs the software programs and modules stored in the memory 104 to execute various functional applications and data processing, so that the machine-exception handling method of the foregoing application program can be implemented. The memory 104 may include a high-speed random-access memory (RAM), and may further include a non-volatile memory, for example, one or more magnetic storage apparatuses, flash memories, or other non-volatile solid-state memories. In some examples, the memory 104 may further include memories that are remotely disposed relative to the processor 102. These remote memories may be connected to the computer terminal 10 via a network. An example of the foregoing network includes, but is not limited to, the Internet, an Intranet, a local area network, a mobile communications network, and a combination of them.

The transmission apparatus 106 is configured to receive or send data via a network. A specific example of the foregoing network may include a wireless network provided by a communications provider of the computer terminal 10. In an example, the transmission apparatus 106 includes a Network Interface Controller (NIC), which can be connected to another network device via a base station to communicate with the Internet. In an example, the transmission apparatus 106 may be a Radio Frequency (RF) module, and is configured to wirelessly communicate with the Internet.

In the foregoing operation environment, the present application provides a machine-exception handling method as shown in FIG. 2. FIG. 2 is a flowchart of a machine-exception handling method according to Embodiment 1 of the present application.

Step S202. Gradient consumption time of a target machine is acquired.

In step S202 of the present application, the gradient consumption time is used to denote gradient related time consumed by the target machine in a training process. In this embodiment of the present application, the gradient consumption time includes first time consumed by the target machine to calculate a gradient and/or second time consumed by the target machine to send the gradient.

Step S204. It is determined whether the gradient consumption time satisfies a predetermined condition compared with a preacquired consumption time average value.

In step S202 of the present application, the consumption time average value is used to denote an average value of the gradient related time consumed by all machines other than the target machine in a cluster in the training process. In this embodiment of the present application, the consumption time average value includes a first average value of time consumed by all the machines other than the target machine in a system to calculate the gradient and/or a second average value of time consumed by all the machines other than the target machine to send the gradient.

Optionally, the step of determining whether the gradient consumption time satisfies a predetermined condition compared with a preacquired consumption time average value includes: determining whether the first time is greater than a product of the first average value and a first preset coefficient, wherein if the first time is greater than the product of the first average value and the first preset coefficient, it is determined that the gradient consumption time satisfies the predetermined condition compared with the consumption time average value, or if the first time is less than or equal to the product of the first average value and the first preset coefficient, it is determined that the gradient consumption time does not satisfy the predetermined condition compared with the consumption time average value; and/or, determining whether the second time is greater than a product of the second average value and a second preset coefficient, wherein if the second time is greater than the product of the second average value and the second preset coefficient, it is determined that the gradient consumption time satisfies the predetermined condition compared with the consumption time average value, or if the second time is less than or equal to the product of the second average value and the second preset coefficient, it is determined that the gradient consumption time does not satisfy the predetermined condition compared with the consumption time average value.

Step S206. It is determined that the target machine is abnormal if the gradient consumption time satisfies the predetermined condition compared with the consumption time average value.

In step S206 of the present application, if the first time is greater than the product of the first average value and the first preset coefficient, and/or, if the second time is greater than the product of the second average value and the second preset coefficient, it is determined that the target machine is abnormal.

The machine-exception handling method provided in this embodiment includes, but is not limited to, making determination according to two dimensions, that is, first time consumed by each machine to calculate a gradient and second time consumed by each machine to send the gradient. The used predetermined condition is that if the target machine still has not sent the gradient when a product of multiplying an average value of gradient sending time of all machines by the second preset coefficient (the second preset coefficient may be, for example, 2) ends, it is considered that the target machine is an abnormal machine (that is, assuming that nine out of ten machines have sent the gradient within 5 seconds but the target machine still has not sent the gradient after 10 seconds end, it is considered that the target machine is a slow machine), and/or, that when the target machine still has not calculated the gradient after a product of multiplying time average value consumed by all machines to calculate the gradient by the first preset coefficient (the first preset coefficient may be, for example, 3) ends, it is considered that the target machine is an abnormal machine.

Once it is determined that the target machine is abnormal, a currently returned gradient of machines may be used to perform a weight update operation without waiting for gradients of these abnormal machines, and all machines are then instructed to enter a next round of iteration. As such, it is not necessary to wait for abnormal machines, so that a large amount of time can be saved. Specific implementation manners are described in detail in subsequent embodiments, and details are not described here.

As can be seen, in the solution provided in Embodiment 1 of the present application, gradient consumption time of a target machine is compared with a consumption time average value of all machines other than the target machine, to determine whether the target machine is abnormal. When the target machine is abnormal, a training strategy is adjusted in time, to avoid the problem of increased training costs caused by low computation or communication speeds of some machines, so that the objective of determining an abnormal machine in a cluster in time can be achieved, the technical effect of reducing training costs can be achieved, and the technical problem of high training costs caused by low computation or communication speeds of some machines in the cluster can be solved.

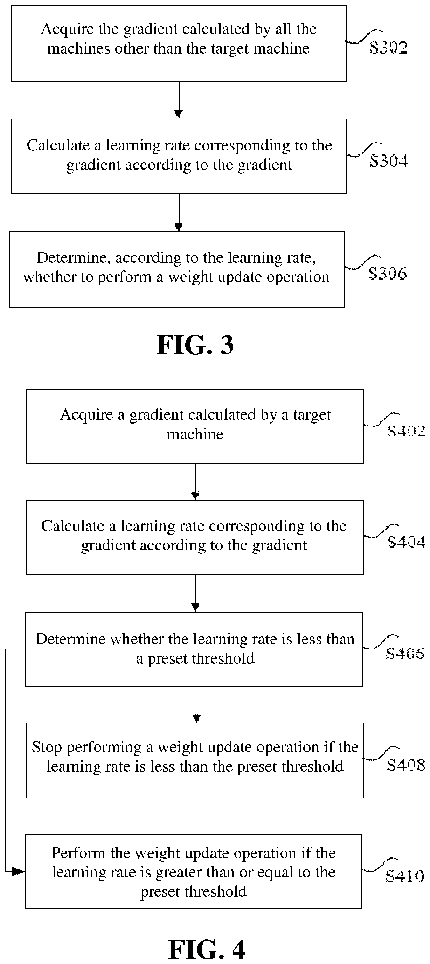

In an optional implementation manner, as shown in FIG. 3, after it is determined that the target machine is abnormal, the machine-exception handling method in this embodiment may further include:
Step S302. The gradient calculated by all the machines other than the target machine is acquired.

In step S302 of the present application, after it is determined that the target machine is abnormal and in the machine-exception handling method in this embodiment, a currently returned gradient (that is, the gradient calculated by all the machines other than the target machine) of machines is directly acquired without waiting for the gradient of the abnormal target machine.

Step S304. A learning rate corresponding to the gradient is calculated according to the gradient.

In step S304 of the present application, the method of calculating a learning rate corresponding to the gradient according to the gradient may include: calculating the learning rate by using a formula Eta(i) = A × i^{th} dimensional gradient/(B + sqrt(sum(i^{th} dimensional gradient × i^{th} dimensional gradient))), wherein Eta(i) is the learning rate, A is the first preset coefficient, B is the second preset coefficient, the gradient is a vector formed by n i^{th} dimensional gradients, n is a quantity of dimensions of the gradient, and 0<i≤n.

sum(i^{th} dimensional gradient × i^{th} dimensional gradient) is a summation operation of the squares of an i^{th} dimensional gradient of a current round of iteration and an i^{th} dimensional gradient of M rounds of iteration before the current round, where M may be, for example, 20, and this is not limited in this embodiment.

Step S306. It is determined, according to the learning rate, whether to perform a weight update operation.

In step S306 of the present application, the step of determining, according to the learning rate, whether to perform a weight update operation includes: determining whether the learning rate is less than a preset threshold; and stopping performing the weight update operation if the learning rate is less than the preset threshold; or performing the weight update operation if the learning rate is greater than or equal to the preset threshold.

Optionally, the preset threshold in this embodiment may be 1e⁻⁵, that is, 1 multiplied by 10 to the power of negative 5.

Further, the step of performing the weight update operation includes: calculating an updated weight according to the learning rate, the gradient, and a historical weight, wherein the historical weight is a weight used by the target machine in a training process. Optionally, the step of calculating an updated weight according to the learning rate, the gradient, and a historical weight includes: calculating the updated weight by using a formula updated weight = historical weight + (-learning rate × gradient).

The historical weight is a weight used by the target machine during a current round of iteration, and the updated weight is a weight that needs to be used by the machine in a next round of iteration.

In an optional implementation manner, after the step of performing the weight update operation, the machine-exception handling method in this embodiment may further include:
Step S10. The updated weight is sent to the target machine and all the machines other than the target machine, to instruct the target machine and all the machines other than the target machine to perform training according to the updated weight.

In step S10 of the present application, after it is determined that the target machine is abnormal and in the machine-exception handling method in this embodiment, the weight update operation is directly performed according to a currently returned gradient of the machines without waiting for the gradient returned by the target machine. The updated weight is then sent to all machines, to instruct all the machines to enter a next round of iteration, so that a large amount of time can be saved.

In the machine-exception handling method in this embodiment, first, an abnormal machine in a cluster is detected and circumvented to prevent an interruption in the training, the wait for a slow machine, or the like, so that the training can be accelerated and the costs can be saved. Next, information such as a gradient and a round number of iteration can be fully utilized to automatically adjust a learning rate, and different learning rates are used for weights in different dimensions, so that better convergence can be obtained in each dimension, thus further accelerating the training and saving the costs.

As can be seen, there are many machines in a cluster existing in the prior art, and the load is very high and consequently the computation is very slow. Some machines may also have very slow communication speeds because of low-level configuration. As a result, an entire training process is very slow, a large amount of machine resources are used, and the problem of enormous financial costs is caused. In a machine-exception handling method provided in the present application, gradient consumption time of a target machine is compared with a consumption time average value of all machines other than the target machine, to determine whether the target machine is abnormal. When the target machine is abnormal, a training strategy is adjusted in time to avoid the problem of increased training costs caused by low computation or communication speeds of some machines, so that the objective of determining an abnormal machine in a cluster in time can be achieved, and the technical effect of reducing training costs can be achieved.

### Embodiment 2

According to this embodiment of the present application, a method embodiment of a learning-rate adjustment method is further provided. It should be noted that the steps shown in the flowcharts of the accompanying drawings may be performed in a computer system having a set of computer executable instructions. Moreover, although a logic order is shown in the flowcharts, in some circumstances, the shown or described steps may be performed in an order different from the order here.

The present application provides a learning-rate adjustment method as shown in FIG. 4. FIG. 4 is a flowchart of a learning-rate adjustment method according to Embodiment 2 of the present application.

Step S402. A gradient calculated by a target machine is acquired.

In step S402 of the present application, the gradient is a value obtained by obtaining the derivative of a loss function. The loss function is a function of mapping an event (an element in a sample space) onto a real number representing an economic cost or opportunity cost related to the event.

Step S404. A learning rate corresponding to the gradient is calculated according to the gradient.

In step S404 of the present application, the step of calculating a learning rate corresponding to the gradient according to the gradient includes: calculating the learning rate by using a formula Eta(i) = A × i^{th} dimensional gradient/(B + sqrt(sum(i^{th} dimensional gradient × i^{th} dimensional gradient))), wherein Eta(i) is the learning rate, A is a first preset coefficient, B is a second preset coefficient, the gradient is a vector formed by n i^{th} dimensional gradients, n is a quantity of dimensions of the gradient, and 0<i≤n.

sum(i^{th} dimensional gradient × i^{th} dimensional gradient) is a summation operation of the squares of an i^{th} dimensional gradient of a current round of iteration and an i^{th} dimensional gradient of M rounds of iteration before the current round, where M may be, for example, 20, and this is not limited in this embodiment.

Step S406. It is determined whether the learning rate is less than a preset threshold.

In step S406 of the present application, the preset threshold may be 1e⁻⁵, that is, 1 multiplied by 10 to the power of negative 5.

Step S408. Performing a weight update operation is stopped if the learning rate is less than the preset threshold.

Step S410. The weight update operation is performed if the learning rate is greater than or equal to the preset threshold.

In step S410 of the present application, the step of performing the weight update operation includes: calculating an updated weight according to the learning rate, the gradient, and a historical weight, wherein the historical weight is a weight used by the target machine in a training process. Optionally, the step of calculating an updated weight according to the learning rate, the gradient, and a historical weight includes: calculating the updated weight by using a formula updated weight = historical weight + (-learning rate × gradient).

Further, after the step of performing the weight update operation, the machine-exception handling method may further include: sending the updated weight to the target machine to instruct the target machine to perform training according to the updated weight.

In the machine-exception handling method in this embodiment, information such as a gradient and a round number of iteration can be fully utilized to automatically adjust a learning rate, and different learning rates are used for weights in different dimensions, so that better convergence can be obtained in each dimension, thus further accelerating the training and saving the costs.

As can be seen, in the solution provided in Embodiment 2 of the present application, a corresponding learning rate is calculated according to a gradient of a target machine, and performing a weight update operation is stopped if the learning rate is less than a preset threshold, so that the training time can be shortened and the technical effect of reducing training costs can be achieved.

It should be noted that, for brevity, the foregoing method embodiments are described as a series of action combinations. However, those skilled in the art should understand that the present application is not limited to the described action order because according to the present application, some steps may adopt another order or occur simultaneously. Moreover, those skilled in the art should also understand that the embodiments described in the specification all belong to preferred embodiments, and the involved actions and modules are not necessarily required by the present application.

As can be known from the description of the foregoing implementation manners, those skilled in the art may clearly understand that the methods in the embodiments may be implemented by software plus a necessary universal hardware platform or may certainly be implemented by hardware. However, the former is a preferred implementation manner in many cases. Based on such understanding, the technical solutions of the present application essentially, or the part contributing to the prior art may be implemented in the form of a software product. The computer software product is stored in a storage medium (for example, a read-only memory (ROM)/RAM, a magnetic disk, and an optical disc), and includes several instructions for instructing a terminal device (which may be a mobile phone, a computer, a server, a network device, or the like) to perform the methods in the embodiments of the present application.

### Embodiment 3

According to this embodiment of the present application, an apparatus embodiment configured to implement the foregoing embodiment of the machine-exception handling method is further provided. The apparatus provided in the foregoing embodiment of the present application may be operated on a computer terminal.

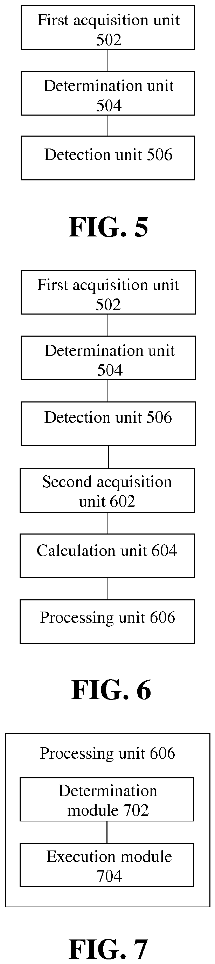

FIG. 5 is a schematic structural diagram of a machine-exception handling apparatus according to an embodiment of the present application.

As shown in FIG. 5, the machine-exception handling apparatus may include a first acquisition unit 502, a determination unit 504, and a detection unit 506.

The first acquisition unit 502 is configured to acquire gradient consumption time of a target machine, wherein the gradient consumption time is used to denote gradient related time consumed by the target machine in a training process. The determination unit 504 is configured to determine whether the gradient consumption time satisfies a predetermined condition compared with a preacquired consumption time average value, wherein the consumption time average value is used to denote an average value of the gradient related time consumed by all machines other than the target machine in a cluster in the training process. The detection unit 506 is configured to determine that the target machine is abnormal if the gradient consumption time satisfies the predetermined condition compared with the consumption time average value.

As can be seen, in the solution provided in Embodiment 3 of the present application, gradient consumption time of a target machine is compared with a consumption time average value of all machines other than the target machine to determine whether the target machine is abnormal. When the target machine is abnormal, a training strategy is adjusted in time to avoid the problem of increased training costs caused by low computation or communication speeds of some machines, so that the objective of determining an abnormal machine in a cluster in time can be achieved, the technical effect of reducing training costs can be achieved, and the technical problem of high training costs caused by low computation or communication speeds of some machines in the cluster can be solved.

It should be noted here that the first acquisition unit 502, the determination unit 504, and the detection unit 506 correspond to step S202 to step S206 in Embodiment 1. The examples and application scenarios implemented by the three modules and the corresponding steps are the same, but are not limited to the content disclosed in Embodiment 1. It should be noted that the foregoing modules may be operated as a part of the apparatus in the computer terminal 10 provided in Embodiment 1, and may be implemented by software or hardware.

Optionally, the gradient consumption time includes first time consumed by the target machine to calculate a gradient and/or second time consumed by the target machine to send the gradient. The consumption time average value includes a first average value of time consumed by all the machines other than the target machine in a system to calculate the gradient and/or a second average value of time consumed by all the machines other than the target machine to send the gradient.

Optionally, the determination unit 504 is configured to determine whether the gradient consumption time satisfies a predetermined condition compared with a preacquired consumption time average value by performing the following steps: determining whether the first time is greater than a product of the first average value and a first preset coefficient, wherein if the first time is greater than the product of the first average value and the first preset coefficient, it is determined that the gradient consumption time satisfies the predetermined condition compared with the consumption time average value, or if the first time is less than or equal to the product of the first average value and the first preset coefficient, it is determined that the gradient consumption time does not satisfy the predetermined condition compared with the consumption time average value; and/or, determining whether the second time is greater than a product of the second average value and a second preset coefficient, wherein if the second time is greater than the product of the second average value and the second preset coefficient, it is determined that the gradient consumption time satisfies the predetermined condition compared with the consumption time average value, or if the second time is less than or equal to the product of the second average value and the second preset coefficient, it is determined that the gradient consumption time does not satisfy the predetermined condition compared with the consumption time average value.

Optionally, as shown in FIG. 6, the machine-exception handling apparatus may further include a second acquisition unit 602, a calculation unit 604, and a processing unit 606.

The second acquisition unit 602 is configured to acquire the gradient calculated by all the machines other than the target machine. The calculation unit 604 is configured to calculate a learning rate corresponding to the gradient according to the gradient. The processing unit 606 is configured to determine, according to the learning rate, whether to perform a weight update operation.

It should be noted here that the second acquisition unit 602, the calculation unit 604, and the processing unit 606 correspond to step S302 to step S306 in Embodiment 1. The examples and application scenarios implemented by the three modules and the corresponding steps are the same, but are not limited to the content disclosed in Embodiment 1. It should be noted that the foregoing modules may be operated as a part of the apparatus in the computer terminal 10 provided in Embodiment 1, and may be implemented by software or hardware.

Optionally, the calculation unit 604 is configured to calculate a learning rate corresponding to the gradient according to the gradient by performing the following step: calculating the learning rate by using a formula Eta(i) = A × i^{th} dimensional gradient/(B + sqrt(sum(i^{th} dimensional gradient × i^{th} dimensional gradient))), wherein Eta(i) is the learning rate, A is the first preset coefficient, B is the second preset coefficient, the gradient is a vector formed by n i^{th} dimensional gradients, n is a quantity of dimensions of the gradient, and 0<i≤n.

Optionally, as shown in FIG. 7, the processing unit 606 includes a determination module 702 and an execution module 704.

The determination module 702 is configured to determine whether the learning rate is less than a preset threshold. The execution module 704 is configured to stop performing the weight update operation if the learning rate is less than the preset threshold; or perform the weight update operation if the learning rate is greater than or equal to the preset threshold.

Optionally, the execution module 704 is configured to perform the weight update operation by performing the following step: calculating an updated weight according to the learning rate, the gradient, and a historical weight, wherein the historical weight is a weight used by the target machine in the training process.

Optionally, the execution module 704 is configured to calculate an updated weight according to the learning rate, the gradient, and a historical weight by performing the following step: calculating the updated weight by using a formula updated weight = historical weight + (-learning rate × gradient).

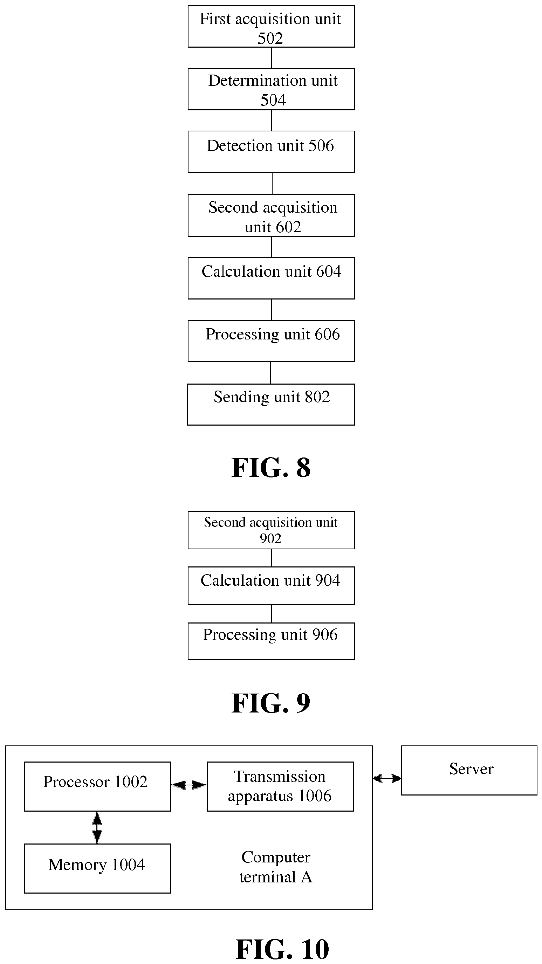

Optionally, as shown in FIG. 8, the machine-exception handling apparatus may further include a sending unit 802.

The sending unit 802 is configured to send the updated weight to the target machine and all the machines other than the target machine to instruct the target machine and all the machines other than the target machine to perform training according to the updated weight.

### Embodiment 4

According to this embodiment of the present application, an apparatus embodiment configured to implement the foregoing embodiment of the learning-rate adjustment method is further provided. The apparatus provided in the foregoing embodiment of the present application may be operated on a computer terminal.

FIG. 9 is a schematic structural diagram of a learning-rate adjustment apparatus according to an embodiment of the present application.

As shown in FIG. 9, the learning-rate adjustment apparatus may include a second acquisition unit 902, a calculation unit 904, and a processing unit 906.

The second acquisition unit 902 is configured to acquire a gradient calculated by a target machine. The calculation unit 904 is configured to calculate a learning rate corresponding to the gradient according to the gradient. The processing unit 906 is configured to determine whether the learning rate is less than a preset threshold; and stop performing a weight update operation if the learning rate is less than the preset threshold; or perform the weight update operation if the learning rate is greater than or equal to the preset threshold.

As can be seen, in the solution provided in Embodiment 4 of the present application, a corresponding learning rate is calculated according to a gradient of a target machine, and performing a weight update operation is stopped if the learning rate is less than a preset threshold, so that the training time can be shortened and the technical effect of reducing training costs can be achieved.

Optionally, the calculation unit 904 is configured to calculate a learning rate corresponding to the gradient according to the gradient by performing the following step: calculating the learning rate by using a formula Eta(i) = A × i^{th} dimensional gradient/(B + sqrt(sum(i^{th} dimensional gradient × i^{th} dimensional gradient))), wherein Eta(i) is the learning rate, A is a first preset coefficient, B is a second preset coefficient, the gradient is a vector formed by n i^{th} dimensional gradients, n is a quantity of dimensions of the gradient, and 0<i≤n.

### Embodiment 5

This embodiment of the present application may provide a computer terminal. The computer terminal may be any computer terminal device in a computer terminal group. Optionally, in this embodiment, the computer terminal may also be replaced with a terminal device such as a mobile terminal.

Optionally, in this embodiment, the computer terminal may be at least one of a plurality of network devices located in a computer network.

In this embodiment, the computer terminal may execute program codes of the following steps in the machine-exception handling method: acquiring gradient consumption time of a target machine, wherein the gradient consumption time is used to denote gradient related time consumed by the target machine in a training process; determining whether the gradient consumption time satisfies a predetermined condition compared with a preacquired consumption time average value, wherein the consumption time average value is used to denote an average value of the gradient related time consumed by all machines other than the target machine in a cluster in the training process; and determining that the target machine is abnormal if the gradient consumption time satisfies the predetermined condition compared with the consumption time average value.

Optionally, FIG. 10 is a structural block diagram of a computer terminal according to an embodiment of the present application. As shown in FIG. 10, the computer terminal A may include one or more (only one is shown in the figure) processors 1002, a memory 1004, and a transmission apparatus 1006.

The memory 1004 may be configured to store software programs and program modules, for example, program instructions/program modules corresponding to the machine-exception handling method and apparatus in this embodiment of the present application. The processor 1002 runs the software programs and the program modules stored in the memory 1004, to execute various functional applications and data processing, so that the foregoing machine-exception handling method can be implemented. The memory 1004 may include a high-speed RAM, and may further include a non-volatile memory, for example, one or more magnetic storage apparatuses, flash memories, or other non-volatile solid-state memories. In some examples, the memory 1004 may further include memories that are remotely disposed relative to the processor. These remote memories may be connected to the terminal A via a network. An example of the foregoing network includes, but is not limited to, the Internet, an Intranet, a local area network, a mobile communications network, and a combination of them.

The transmission apparatus 1006 is configured to receive or send data via a network. A specific example of the foregoing network may include a wired network and a wireless network. In an example, the transmission apparatus 1006 includes a NIC, which can be connected to another network device or a router via a network cable to communicate with the Internet or a local area network. In an example, the transmission apparatus 1006 is an RF module, and is configured to wirelessly communicate with the Internet.

Specifically, the memory 1004 is configured to store information about a preset action condition and a preset right of a user and an application program.

The processor 1002 may use the transmission apparatus to invoke the information and the application program stored in the memory to perform the following steps: acquiring a message type and a destination address of a message to be detected; acquiring a first attack type set corresponding to the message type from a preset configuration file according to the message type, and acquiring a second attack type set according to the destination address, wherein the second attack type set includes types of attacks on a device pointed by the destination address within a preset period of time; generating, according to the first attack type set and the second attack type set, a detection policy chain corresponding to the message to be detected; and detecting, according to the detection policy chain, the message to be detected.

As can be seen, in the solution provided in Embodiment 5 of the present application, gradient consumption time of a target machine is compared with a consumption time average value of all machines other than the target machine to determine whether the target machine is abnormal. When the target machine is abnormal, a training strategy is adjusted in time to avoid the problem of increased training costs caused by low computation or communication speeds of some machines, so that the objective of determining an abnormal machine in a cluster in time can be achieved, the technical effect of reducing training costs can be achieved, and the technical problem of high training costs caused by low computation or communication speeds of some machines in the cluster can be solved.

Those of ordinary skill in the art may understand that the structure shown in FIG. 10 is only schematic, and the computer terminal may also be a terminal device such as a smartphone (such as an Android phone or an iOS phone), a tablet computer, a palmtop computer, a Mobile Internet Device (MID), and a PDA. FIG. 10 does not limit the structure of the foregoing electronic apparatus. For example, the computer terminal 10 may further include more or fewer components than those shown in FIG. 10 (such as a network interface or a display apparatus) or have a configuration different from that shown in FIG. 10.

Those of ordinary skill in the art may understand that all or a part of the steps in various methods of the foregoing embodiments may be implemented by a program instructing hardware related to a terminal device. The program may be stored in a computer readable storage medium. The storage medium may include: a flash drive, a ROM, a RAM, a magnetic disk, or an optical disc.

### Embodiment 6

This embodiment of the present application may further provide a computer terminal. The computer terminal may be any computer terminal device in a computer terminal group. Optionally, in this embodiment, the computer terminal may also be replaced with a terminal device such as a mobile terminal.

Optionally, in this embodiment, the computer terminal may be at least one of a plurality of network devices located in a computer network.

In this embodiment, the computer terminal may execute program codes of the following steps in the learning-rate adjustment method: acquiring a gradient calculated by a target machine; calculating a learning rate corresponding to the gradient according to the gradient; determining whether the learning rate is less than a preset threshold; and stopping performing a weight update operation if the learning rate is less than the preset threshold; or performing the weight update operation if the learning rate is greater than or equal to the preset threshold.

The computer terminal may include: one or more processors, a memory, and a transmission apparatus.

The memory may be configured to store software programs and program modules, for example, program instructions/program modules corresponding to the learning-rate adjustment method and the apparatus in this embodiment of the present application. The processor runs the software programs and the program modules stored in the memory to execute various functional applications and data processing, so that the foregoing machine-exception handling method can be implemented. The memory may include a high-speed RAM, and may further include a non-volatile memory, for example, one or more magnetic storage apparatuses, flash memories, or other non-volatile solid-state memories. In some examples, the memory may further include memories that are remotely disposed relative to the processor. These remote memories may be connected to the terminal A via a network. An example of the foregoing network includes, but is not limited to, the Internet, an Intranet, a local area network, a mobile communications network, and a combination of them.

The transmission apparatus is configured to receive or send data via a network. A specific example of the foregoing network may include a wired network and a wireless network. In an example, the transmission apparatus includes a NIC, which can be connected to another network device or a router via a network cable to communicate with the Internet or a local area network. In an example, the transmission apparatus is an RF module, and is configured to wirelessly communicate with the Internet.

Specifically, the memory is configured to store information about a preset action condition and a preset right of a user and an application program.

The processor may use the transmission apparatus to invoke the information and the application program stored in the memory to perform the following steps: acquiring a gradient calculated by a target machine; calculating a learning rate corresponding to the gradient according to the gradient; determining whether the learning rate is less than a preset threshold; and stopping performing a weight update operation if the learning rate is less than the preset threshold; or performing the weight update operation if the learning rate is greater than or equal to the preset threshold.

As can be seen, in the solution provided in Embodiment 6 of the present application, a corresponding learning rate is calculated according to a gradient of a target machine, and performing a weight update operation is stopped if the learning rate is less than a preset threshold, so that the training time can be shortened and the technical effect of reducing training costs can be achieved.

Those of ordinary skill in the art may understand that the computer terminal may also be a terminal device such as a smartphone (such as an Android phone or an iOS phone), a tablet computer, a palmtop computer, a MID, and a PDA.

Those of ordinary skill in the art may understand that all or a part of the steps in various methods of the foregoing embodiments may be implemented by a program instructing hardware related to a terminal device. The program may be stored in a computer readable storage medium. The storage medium may include: a flash drive, a ROM, a RAM, a magnetic disk, or an optical disc.

### Embodiment 7

This embodiment of the present application further provides a storage medium. Optionally, in this embodiment, the storage medium may be configured to store program codes executed for the machine-exception handling method provided in Embodiment 1.

Optionally, in this embodiment, the storage medium may be located in any computer terminal in a computer terminal group in a computer network, or located in any mobile terminal in a mobile terminal group.

Optionally, in this embodiment, the storage medium is configured to store program codes used to perform the following steps: acquiring gradient consumption time of a target machine, wherein the gradient consumption time is used to denote gradient related time consumed by the target machine in a training process; determining whether the gradient consumption time satisfies a predetermined condition compared with a preacquired consumption time average value, wherein the consumption time average value is used to denote an average value of the gradient related time consumed by all machines other than the target machine in a cluster in the training process; and determining that the target machine is abnormal if the gradient consumption time satisfies the predetermined condition compared with the consumption time average value.

Optionally, in this embodiment, the storage medium is further configured to store program codes used to perform the following steps: determining whether the first time is greater than a product of a first average value and a first preset coefficient, wherein if the first time is greater than the product of the first average value and the first preset coefficient, it is determined that the gradient consumption time satisfies the predetermined condition compared with the consumption time average value, or if the first time is less than or equal to the product of the first average value and the first preset coefficient, it is determined that the gradient consumption time does not satisfy the predetermined condition compared with the consumption time average value; and/or, determining whether the second time is greater than a product of a second average value and a second preset coefficient, wherein if the second time is greater than the product of the second average value and the second preset coefficient, it is determined that the gradient consumption time satisfies the predetermined condition compared with the consumption time average value, or if the second time is less than or equal to the product of the second average value and the second preset coefficient, it is determined that the gradient consumption time does not satisfy the predetermined condition compared with the consumption time average value.

Optionally, in this embodiment, the storage medium is further configured to store program codes used to perform the following steps: acquiring the gradient calculated by all the machines other than the target machine; calculating a learning rate corresponding to the gradient according to the gradient; and determining, according to the learning rate, whether to perform a weight update operation.

Optionally, in this embodiment, the storage medium is further configured to store program codes used to perform the following step: calculating the learning rate by using a formula Eta(i) = A × i^{th} dimensional gradient/(B + sqrt(sum(i^{th} dimensional gradient × i^{th} dimensional gradient))), wherein Eta(i) is the learning rate, A is the first preset coefficient, B is the second preset coefficient, the gradient is a vector formed by n i^{th} dimensional gradients, n is a quantity of dimensions of the gradient, and 0<i≤n.

Optionally, in this embodiment, the storage medium is further configured to store program codes used to perform the following steps: determining whether the learning rate is less than a preset threshold; and stopping performing the weight update operation if the learning rate is less than the preset threshold; or performing the weight update operation if the learning rate is greater than or equal to the preset threshold.

Optionally, in this embodiment, the storage medium is further configured to store program codes used to perform the following step: calculating an updated weight according to the learning rate, the gradient, and a historical weight, wherein the historical weight is a weight used by the target machine in the training process.

Optionally, in this embodiment, the storage medium is further configured to store program codes used to perform the following step: calculating the updated weight by using a formula updated weight = historical weight + (-learning rate × gradient).

Optionally, in this embodiment, the storage medium is further configured to store program codes used to perform the following step: sending the updated weight to the target machine and all the machines other than the target machine to instruct the target machine and all the machines other than the target machine to perform training according to the updated weight.

### Embodiment 8

This embodiment of the present application further provides a storage medium. Optionally, in this embodiment, the storage medium may be configured to store program codes executed by the learning-rate adjustment method provided in Embodiment 2.

Optionally, in this embodiment, the storage medium may be located in any computer terminal in a computer terminal group in a computer network, or located in any mobile terminal in a mobile terminal group.

Optionally, in this embodiment, the storage medium is configured to store program codes used to perform the following steps: acquiring a gradient calculated by a target machine; calculating a learning rate corresponding to the gradient according to the gradient; determining whether the learning rate is less than a preset threshold; and stopping performing a weight update operation if the learning rate is less than the preset threshold; or performing the weight update operation if the learning rate is greater than or equal to the preset threshold.

Optionally, in this embodiment, the storage medium is further configured to store program codes used to perform the following step: calculating the learning rate by using a formula Eta(i) = A × i^{th} dimensional gradient/(B + sqrt(sum(i^{th} dimensional gradient × i^{th} dimensional gradient))), wherein Eta(i) is the learning rate, A is a first preset coefficient, B is a second preset coefficient, the gradient is a vector formed by n i^{th} dimensional gradients, n is a quantity of dimensions of the gradient, and 0<i≤n.

Optionally, in this embodiment, the storage medium is further configured to store program codes used to perform the following step: calculating an updated weight according to the learning rate, the gradient, and a historical weight, wherein the historical weight is a weight used by the target machine in a training process.

Optionally, in this embodiment, the storage medium is further configured to store program codes used to perform the following step: calculating the updated weight by using a formula updated weight = historical weight + (-learning rate × gradient).

Optionally, in this embodiment, the storage medium is further configured to store program code used to perform the following steps: Optionally, in this embodiment, the storage medium is further configured to store program code used to perform the following steps:
Optionally, in this embodiment, the storage medium may include, but not limited to, any medium that can store program codes, such as a USB flash drive, a ROM, a RAM, a removable hard disk, a magnetic disk, or an optical disc.

Optionally, reference may be made to the example described in Embodiment 1 for a specific example in this embodiment, which will not be described here in this embodiment.

The foregoing sequence numbers in the embodiments of the present application are merely for the convenience of description, and do not imply the preference among the embodiments.

In the foregoing embodiments of the present application, different emphases are placed on the description of the embodiments. For a part that is not described in detail in an embodiment, reference may be made to related description in another embodiment.

In the several embodiments provided in the present application, it should be understood that the disclosed apparatus for processing order information may be implemented in other manners. For example, the described apparatus embodiments are merely exemplary. For example, the unit division is merely logical function division, and there may be other divisions in actual implementation. For example, a plurality of units or components may be combined or integrated into another system, or some features may be ignored or not performed. In addition, the shown or discussed mutual couplings, direct couplings or communication connections may be implemented by using some interfaces. The indirect couplings or communication connections between the units or modules may be implemented in electric or other forms.

The units described as separate parts may or may not be physically separate, and parts shown as units may or may not be physical units. They may be located in one position, or may be distributed on a plurality of network units. A part or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented either in the form of hardware or in the form of a software functional unit.

The integrated unit, if being implemented in the form of a software functional unit and sold or used as an independent product, may be stored in a computer readable storage medium. Based on such understanding, the technical solutions of the present application essentially, or the part contributing to the prior art, or all or a part of the technical solutions may be implemented in the form of a software product. The computer software product may be stored in the storage medium, and includes several instructions for instructing a computer device (which may be a personal computer, a server, a network device, or the like) to perform all or a part of the steps of the methods described in the embodiments of the present application. The storage medium includes: any medium that can store program codes, such as a USB flash drive, a ROM, a RAM, a removable hard disk, a magnetic disk, or an optical disc.

The foregoing descriptions are only preferred implementation manners of the present application. It should be noted that those of ordinary skill in the art can also make several improvements and modifications without departing from the principle of the present application. These improvements and modifications should also be deemed as falling within the protection scope of the present application.

## Claims

1. A machine-exception handling method, comprising:
acquiring gradient consumption time of a target machine, wherein the gradient consumption time is used to denote gradient related time consumed by the target machine in a training process;
determining whether the gradient consumption time satisfies a predetermined condition compared with a preacquired consumption time average value, wherein the consumption time average value is used to denote an average value of the gradient related time consumed by all machines other than the target machine in a cluster in the training process; and
determining that the target machine is abnormal if the gradient consumption time satisfies the predetermined condition compared with the consumption time average value.

2. The method of claim 1, wherein the gradient consumption time comprises first time consumed by the target machine to calculate a gradient and/or second time consumed by the target machine to send the gradient; and the consumption time average value comprises a first average value of time consumed by all the machines other than the target machine in a system to calculate the gradient and/or a second average value of time consumed by all the machines other than the target machine to send the gradient.

3. The method of claim 2, wherein the step of determining whether the gradient consumption time satisfies a predetermined condition compared with a preacquired consumption time average value comprises:
determining whether the first time is greater than a product of the first average value and a first preset coefficient, wherein if the first time is greater than the product of the first average value and the first preset coefficient, it is determined that the gradient consumption time satisfies the predetermined condition compared with the consumption time average value, or if the first time is less than or equal to the product of the first average value and the first preset coefficient, it is determined that the gradient consumption time does not satisfy the predetermined condition compared with the consumption time average value;
and/or,
determining whether the second time is greater than a product of the second average value and a second preset coefficient, wherein if the second time is greater than the product of the second average value and the second preset coefficient, it is determined that the gradient consumption time satisfies the predetermined condition compared with the consumption time average value, or if the second time is less than or equal to the product of the second average value and the second preset coefficient, it is determined that the gradient consumption time does not satisfy the predetermined condition compared with the consumption time average value.

4. The method of any of claims 1 to 3, wherein after it is determined that the target machine is abnormal, the method further comprises:
acquiring the gradient calculated by all the machines other than the target machine;
calculating a learning rate corresponding to the gradient according to the gradient; and
determining, according to the learning rate, whether to perform a weight update operation.

5. The method of claim 4, wherein the step of calculating a learning rate corresponding to the gradient according to the gradient comprises:
calculating the learning rate by using a formula Eta(i) = A × i^{th} dimensional gradient/(B + sqrt(sum(i^{th} dimensional gradient × i^{th} dimensional gradient))), wherein Eta(i) is the learning rate, A is the first preset coefficient, B is the second preset coefficient, the gradient is a vector formed by n i^{th} dimensional gradients, n is a quantity of dimensions of the gradient, and 0<i≤n.

6. The method of claim 5, wherein the step of determining, according to the learning rate, whether to perform a weight update operation comprises:
determining whether the learning rate is less than a preset threshold; and
stopping performing the weight update operation if the learning rate is less than the preset threshold; or
performing the weight update operation if the learning rate is greater than or equal to the preset threshold.

7. The method of claim 6, wherein the step of performing the weight update operation comprises:
calculating an updated weight according to the learning rate, the gradient, and a historical weight, wherein the historical weight is a weight used by the target machine in the training process.

8. The method of claim 7, wherein the step of calculating an updated weight according to the learning rate, the gradient, and a historical weight comprises:
calculating the updated weight by using a formula updated weight = historical weight + (-learning rate × gradient).

9. The method of claim 7 or 8, wherein after the step of performing the weight update operation, the method further comprises:
sending the updated weight to the target machine and all the machines other than the target machine to instruct the target machine and all the machines other than the target machine to perform training according to the updated weight.

10. A learning-rate adjustment method, comprising:
acquiring a gradient calculated by a target machine;
calculating a learning rate corresponding to the gradient according to the gradient;
determining whether the learning rate is less than a preset threshold; and
stopping performing a weight update operation if the learning rate is less than the preset threshold; or
performing the weight update operation if the learning rate is greater than or equal to the preset threshold.

11. The method of claim 10, wherein the step of calculating a learning rate corresponding to the gradient according to the gradient comprises:
calculating the learning rate by using a formula Eta(i) = A × i^{th} dimensional gradient/(B + sqrt(sum(i^{th} dimensional gradient × i^{th} dimensional gradient))), wherein Eta(i) is the learning rate, A is a first preset coefficient, B is a second preset coefficient, the gradient is a vector formed by n i^{th} dimensional gradients, n is a quantity of dimensions of the gradient, and 0<i≤n.

12. The method of claim 10, wherein the step of performing the weight update operation comprises:
calculating an updated weight according to the learning rate, the gradient, and a historical weight, wherein the historical weight is a weight used by the target machine in a training process.

13. The method of claim 12, wherein the step of calculating an updated weight according to the learning rate, the gradient, and a historical weight comprises:
calculating the updated weight by using a formula updated weight = historical weight + (-learning rate × gradient).

14. The method of claim 12 or 13, wherein after the step of performing the weight update operation, the method further comprises:
sending the updated weight to the target machine to instruct the target machine to perform training according to the updated weight.

15. A machine-exception handling apparatus, comprising:
a first acquisition unit configured to acquire gradient consumption time of a target machine, wherein the gradient consumption time is used to denote gradient related time consumed by the target machine in a training process;
a determination unit configured to determine whether the gradient consumption time satisfies a predetermined condition compared with a preacquired consumption time average value, wherein the consumption time average value is used to denote an average value of the gradient related time consumed by all machines other than the target machine in a cluster in the training process; and
a detection unit configured to determine that the target machine is abnormal if the gradient consumption time satisfies the predetermined condition compared with the consumption time average value.

16. The apparatus of claim 15, wherein the gradient consumption time comprises first time consumed by the target machine to calculate a gradient and/or second time consumed by the target machine to send the gradient; and the consumption time average value comprises a first average value of time consumed by all the machines other than the target machine in a system to calculate the gradient and/or a second average value of time consumed by all the machines other than the target machine to send the gradient.

17. The apparatus of claim 16, wherein the determination unit is configured to determine whether the gradient consumption time satisfies a predetermined condition compared with a preacquired consumption time average value by performing the following steps:
determining whether the first time is greater than a product of the first average value and a first preset coefficient, wherein if the first time is greater than the product of the first average value and the first preset coefficient, it is determined that the gradient consumption time satisfies the predetermined condition compared with the consumption time average value, or if the first time is less than or equal to the product of the first average value and the first preset coefficient, it is determined that the gradient consumption time does not satisfy the predetermined condition compared with the consumption time average value;
and/or,
determining whether the second time is greater than a product of the second average value and a second preset coefficient, wherein if the second time is greater than the product of the second average value and the second preset coefficient, it is determined that the gradient consumption time satisfies the predetermined condition compared with the consumption time average value, or if the second time is less than or equal to the product of the second average value and the second preset coefficient, it is determined that the gradient consumption time does not satisfy the predetermined condition compared with the consumption time average value.

18. The apparatus of any of claims 15 to 17, wherein the apparatus further comprises:
a second acquisition unit configured to acquire the gradient calculated by all the machines other than the target machine;
a calculation unit configured to calculate a learning rate corresponding to the gradient according to the gradient; and
a processing unit configured to determine, according to the learning rate, whether to perform a weight update operation.

19. The apparatus of claim 18, wherein the calculation unit is configured to calculate a learning rate corresponding to the gradient according to the gradient by performing the following step:
calculating the learning rate by using a formula Eta(i) = A × i^{th} dimensional gradient/(B + sqrt(sum(i^{th} dimensional gradient × i^{th} dimensional gradient))), wherein Eta(i) is the learning rate, A is the first preset coefficient, B is the second preset coefficient, the gradient is a vector formed by n i^{th} dimensional gradients, n is a quantity of dimensions of the gradient, and 0<i≤n.

20. The apparatus of claim 19, wherein the processing unit comprises:
a determination module configured to determine whether the learning rate is less than a preset threshold; and
an execution module configured to stop performing the weight update operation if the learning rate is less than the preset threshold; or perform the weight update operation if the learning rate is greater than or equal to the preset threshold.

21. The apparatus of claim 20, wherein the execution module is configured to perform the weight update operation by performing the following step:
calculating an updated weight according to the learning rate, the gradient, and a historical weight, wherein the historical weight is a weight used by the target machine in the training process.

22. The apparatus of claim 21, wherein the execution module is configured to calculate an updated weight according to the learning rate, the gradient, and a historical weight by performing the following step:
calculating the updated weight by using a formula updated weight = historical weight + (-learning rate × gradient).

23. The apparatus of claim 21 or 22, wherein the apparatus further comprises:
a sending unit configured to send the updated weight to the target machine and all the machines other than the target machine, to instruct the target machine and all the machines other than the target machine to perform training according to the updated weight.

24. A learning-rate adjustment apparatus, comprising:
a second acquisition unit configured to acquire a gradient calculated by a target machine;
a calculation unit configured to calculate a learning rate corresponding to the gradient according to the gradient; and
a processing unit configured to determine whether the learning rate is less than a preset threshold; and stop, performing a weight update operation if the learning rate is less than the preset threshold; or perform the weight update operation if the learning rate is greater than or equal to the preset threshold.

25. The apparatus of claim 18, wherein the calculation unit is configured to calculate a learning rate corresponding to the gradient according to the gradient by performing the following step:
calculating the learning rate by using a formula Eta(i) = A × i^{th} dimensional gradient/(B + sqrt(sum(i^{th} dimensional gradient × i^{th} dimensional gradient))), wherein Eta(i) is the learning rate, A is a first preset coefficient, B is a second preset coefficient, the gradient is a vector formed by n i^{th} dimensional gradients, n is a quantity of dimensions of the gradient, and 0<i≤n.
